# EUROPEAN PATENT SPECIFICATION

(11) **EP 4 277 352 B1**
(45) Date of publication and mention of the grant of the patent: **11.02.2026**
(21) Application number: 23169268.2
(22) Date of filing: 21.04.2023
(51) Int. Cl.: H04W 36/08, H04W 36/18, H04W 36/00

(54) **WIRELESS FAST ROAMING SYSTEM AND METHOD**
DRAHTLOSES SCHNELLES ROAMINGSYSTEM UND VERFAHREN
SYSTÈME ET PROCÉDÉ D'ITINÉRANCE RAPIDE SANS FIL

(30) Priority: 09.05.2022 CN 202210499360
(43) Date of publication of application: 15.11.2023
(73) Proprietor: HAN Networks Co., Ltd., Beijing City 100000 (CN)
(72) Inventor: MU, Xing, Beijing, 100000 (CN); CHANG, Zhimin, Beijing, 100000 (CN); FAN, Xiaowei, Beijing, 100000 (CN); WANG, Hui, Beijing, 100000 (CN); DUAN, Mingzhe, Beijing, 100000 (CN)
(74) Representative: Cabinet Chaillot

(56) References cited:
- CN-A- 101 145 802
- CN-A- 112 887 921
- CN-C- 100 579 276
- US-A1- 2017 339 615

## Description

### BACKGROUND OF THE INVENTION

### 1. Field of the Invention

The invention relates to the technical field of communication, and more particularly, to a wireless fast roaming system.

### 2. Description of the Related Art

In recent years, wireless network technology has developed rapidly since wireless network is easy to setup and is easy to carry and re-install in another place, etc. In addition, with the rapid development of computer technology, communication technology and automatic control technology, wireless network is also widely used in the field of rail transit. In the field of the rail transit, when wireless mobile devices carried on a train are moving fast, the wireless mobile devices need to perform network roaming between different trackside wireless access points due to the influence of signal strength, that is, the wireless mobile devices need to switch from one trackside wireless access point to another wireless access point in the same wireless network.

The currently standard fast roaming (802.11r) in use is implemented for a single base station. It takes about 100ms for 802.11r to complete a fast roaming. Packets will be lost during the fast roaming, so it cannot meet requirements in some scenarios where communications are not allowed to be interrupted. Thus, there is an urgent need for a method for fast and seamless roaming, so that packets will not be lost in the wireless network when devices are moving.

CN100579276C refers to a method for fast inter-zone switching of wireless local area networks for rail communications. CN112887921A refers to a method and device for reducing packet loss when a WAPI CPE device switches between Aps.

### SUMMARY OF THE INVENTION

The invention is defined by the appended set of claims. In view of the problems in the prior art, the present invention provides a wireless fast roaming system, comprising:
a plurality of trackside wireless access points, distributed on both sides of a road;
at least one wireless mobile device, loaded on a vehicle driving on the road, wherein at least two virtual base stations are configured in each wireless mobile device in advance, each of the wireless mobile devices comprises:
   a signal scanning module for performing real-time scanning of wireless signals after the wireless mobile device is started, and adding each of the plurality of trackside wireless access points found by the scanning to an associable basic service set;
   a signal screening module, connected to the signal scanning module, and configured to screen the associable basic service set to obtain an optimal trackside wireless access point and a suboptimal trackside wireless access point;
   a link establishment module, connected to the signal screening module, and configured to establish a data link between one virtual base station and the optimal trackside wireless access point for data transmission, and configured to establish a backup link between the other of the virtual base stations and the suboptimal trackside wireless access point; characterized in that,
   a fast roaming module, connected to the signal scanning module and the signal screening module, respectively, and configured to control the virtual base station corresponding to the backup link to roam, so as to continuously optimize the backup link, and configured to monitor a link status of the data link in real time, and to switch a current backup link to the data link to the backup link when the link status indicates that the data link is abnormal;
each of the trackside wireless access points in the associable basic service set is associated with a corresponding signal-to-noise ratio;
the fast roaming module comprises:
   a first roaming unit, configured to obtain, after the backup link is established, the optimal trackside wireless access point in the associable basic service set currently identified by the signal scanning module output by the signal screening module in real time, and the optimal trackside wireless access point being output as a real-time optimal wireless access point;
   an optimization unit, connected to the first roaming unit, and configured to output a roaming signal when the signal-to-noise ratio of the real-time optimal wireless access point is higher than the signal-to-noise ratio of the trackside wireless access point associated with the backup link and when a second difference between the signal-to-noise ratio of the real-time optimal wireless access point and the signal-to-noise ratio of the trackside wireless access point associated with the backup link is higher than a third threshold;
   wherein the link establishment module controls the virtual base station corresponding to the backup link to roam to the real-time optimal wireless access point to establish the backup link, according to the roaming signal, so as to continuously optimize the backup link.

Preferably, each of the plurality of trackside wireless access points in the associable basic service set is associated with a corresponding maximum supported rate and signal-to-noise ratio;
the signal screening module comprises:
a screening unit, configured to delete each of the plurality of trackside wireless access points whose signal-to-noise ratio is less than a first threshold from the associable basic service set to obtain a screening set, and all of the trackside wireless access points in the screening set are arranged, in a sequence of the signal-to-noise ratio from large to small to form a first queue;
an adjustment unit, connected to the screening unit, configured to perform bubble sort on each of the trackside wireless access points in the first queue, according to the maximum supported rate and the signal-to-noise ratio, to obtain a second queue;
an extraction unit, connected to the adjustment unit, configured to extract the trackside wireless access point ranking first in the second queue as the optimal trackside wireless access point, and extract the trackside wireless access point closely adjacent to the optimal trackside wireless access point as the suboptimal trackside wireless access point.

Preferably, when the adjustment unit performs the bubble sort, a first difference between the signal-to-noise ratios corresponding to two adjacent trackside wireless access points in the first queue is calculated , and sequences of the two adjacent trackside wireless access points in the first queue are exchanged when the first difference is less than a second threshold and the trackside wireless access point sorting at a first of the two adjacent trackside wireless access points has a lower value of the maximum supported rate.

Preferably, each of the plurality of trackside wireless access points is associated with an unique identity information;
the fast roaming module further comprises a judging unit, wherein the judging unit is connected to the first roaming unit for outputting a first signal when it is judged that the unique identity information of the real-time optimal wireless access point is consistent with the unique identity of the trackside wireless access point associated with the data link, and for outputting a second signal when it is judged that the unique identity information of the real-time optimal wireless access point is consistent with the unique identity of the trackside wireless access point associated with the data link;
wherein the first roaming unit discards the real-time optimal wireless access point based on the first signal, and outputs the real-time optimal wireless access point based on the second signal.

Preferably, abnormal status of the link comprises: the data link is disconnected, or the signal-to-noise ratio of the data link is less than the signal-to-noise ratio of the backup link and a third difference between the signal-to-noise ratio of the data link and the signal-to-noise ratio of the backup link is greater than a fourth threshold, or the signal-to-noise ratio of the data link is less than a fifth threshold and the signal-to-noise ratio of the data link is less than the signal-to-noise ratio of the backup link.

Preferably, a working channel is pre-configured in the wireless mobile device, the signal scanning module, when performing a real-time scanning of a wireless signal, first scans the configured working channel, and begins to scan all channels when an associable trackside wireless access point is not available in the working channel.

Preferably, the fast roaming module also generates an update signal each time the current backup link is switched to the data link; at least one proxy device is connected to the wireless mobile device via a wired connection;
the wireless mobile device further comprises a forwarding and updating module, connected to the fast roaming module, and configured to actively broadcast upwards, according to the update signal, an update message containing MAC addresses of the proxy devices via the trackside wireless access point associated with the switched data link, and configured to trigger the updating of forwarding tables of all forwarding devices in an uplink.

Preferably, the wireless mobile device is a single radio frequency wireless device.

The technical solution has the following advantages or beneficial effects: a fast roaming of a wireless mobile device is achieved by an alternate association of a single radio frequency wireless link; a seamless switching of data forwarding during a data link switching is achieved by updating forwarding tables; the data link and the backup link perform mutual backup, so that wireless data transmission is not interrupted, packets are not lost in a roaming process, and the network transmission reliability is improved.

### BRIEF DESCRIPTION OF THE DRAWINGS

Figure 1 is a schematic structural diagram of a wireless fast roaming system according to a preferred embodiment of the present invention;
Figure 2 is an example diagram of fast roaming based on a data link and a backup link according to a preferred embodiment of the present invention;
Figure 3 is a schematic flowchart of a wireless fast roaming method according to a preferred embodiment of the present invention.

### DETAILED DESCRIPTION

The present invention will be described in details hereinafter with reference to the accompanying drawings and particular embodiments. However, the invention is not limited to the embodiments. Rather, other embodiments can fall within the scope of the present invention as longs as they conform to the subject matter of the present invention.

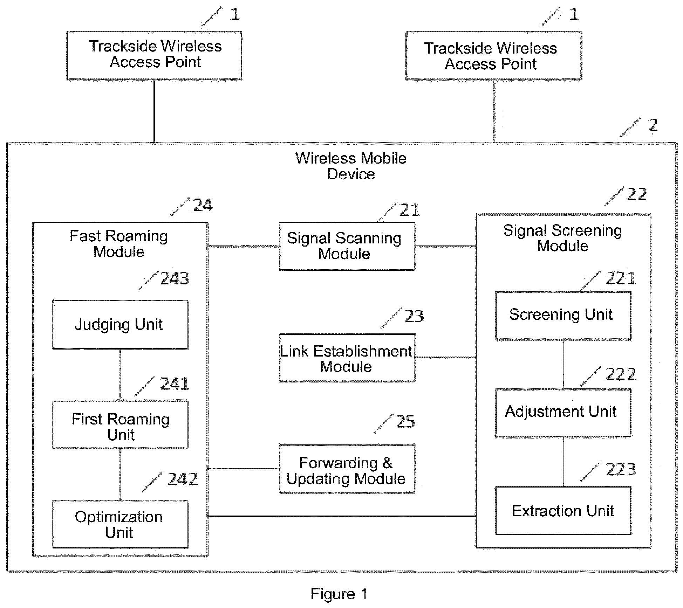

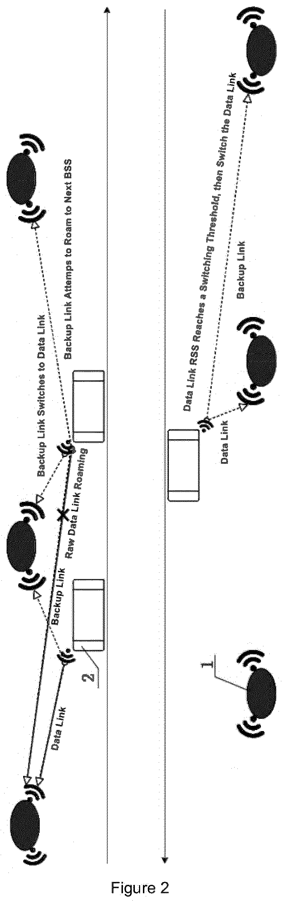

In a preferred embodiment of the present invention, based on the above-mentioned problems in the prior art, the present invention provides a wireless fast roaming system, as shown in Figures 1 and 2, the system comprising:
a plurality of trackside wireless access points 1, distributed on both sides of a road;
at least one wireless mobile device 2, loaded on a vehicle driving on the road, wherein at least two virtual base stations are configured in each wireless mobile device 2 in advance, each of the wireless mobile devices 2 comprises:
   a signal scanning module 21 for performing real-time scanning of wireless signals after the wireless mobile device is started, and adding each of the plurality of trackside wireless access points found by the scanning to an associable basic service set;
   a signal screening module 22, connected to the signal scanning module 21, and configured to centrally screen the associable basic service set to obtain an optimal trackside wireless access point and a suboptimal trackside wireless access point;
   a link establishment module 23, connected to the signal screening module 22, and configured to establish a data link between one of the virtual base stations and the optimal trackside wireless access point for data transmission, and configured to establish a backup link between the other of the virtual base stations and the suboptimal trackside wireless access point;
   a fast roaming module 24, connected to the signal scanning module 21 and the signal screening module 22, respectively, and configured to control the virtual base station corresponding to the backup link to roam, so as to continuously optimize the backup link, and configured to monitor a link status of the data link in real time, and to switch the current backup link to the data link and switch the original data link to the backup link when the link status indicates that the data link is abnormal.

In particular, in this embodiment, the above-mentioned wireless mobile device 2 is a single radio frequency wireless device. It serves as a vehicle-mounted AP (Access Point, a wireless access point), and connects to a plurality of proxy devices via a wired connection to form a local area network, and provides data transmission between each proxy device and each of the plurality of trackside wireless access points 1. Wherein, each of the above-mentioned trackside wireless access points 1 is a standard AP capable of providing BSS (Basic Service Set), without any other special configurations or there is no limitation for types of manufacturers.

At least two virtual base stations are configured in the wireless mobile device 2. The two virtual base stations are created using different BSSIDs, so as to distinguish data on the two virtual base stations through BSSIDs, wherein RA (Receiver Address) masks ensure that both BSSIDs can receive data and respond, and each virtual base station is configured with its own associated state machine to ensure that the two virtual base stations do not interfere with each other. It can be understood that the above-mentioned configurations for the two virtual base stations, such as the different BSSIDs, the RA masks, and the associated state machines are all prior art, and they are basic configurations to ensure the normal operation of the virtual base stations, and specific implementation will not be repeated herein. The two virtual base stations are configured so that a data link and a backup link, corresponding to two of the plurality of trackside wireless access points 1, respectively, can be established, then the two wireless links can be mutual backups for each other. The data link is mainly responsible for data forwarding, and the backup link does not forward data, but is qualified to become a data link. It can be understood that the number of virtual base stations is not limited to two, for example, a plurality of virtual base stations may be configured as fault redundancy for the two virtual base stations as desired.

More specifically, when the wireless mobile device 2 is started, it first needs to scan to find nearby trackside wireless access points 1, and each of the trackside wireless access points 1 can be sequentially added to the associable basic service set according to time when they were found by scanning. Now, the associable basic service set usually contains the plurality of trackside wireless access points 1, and for the two pre-configured virtual base stations, it is only necessary to establish link connections with two of the trackside wireless access points 1. To ensure the quality of the links, it is necessary to screen out an optimal trackside wireless access point 1 and a suboptimal trackside wireless access point 1 before establishing a link connection, and then establish a link connection between one of the virtual base stations and the optimal trackside wireless access point 1 to form a data link for data forwarding, and establishing a backup link between the other of the virtual base stations and the suboptimal trackside wireless access point 1 as a backup, so that the backup link can be switched to the data link in time when the data link is abnormal, so that wireless data transmission is not interrupted, packets are not lost in a roaming process, and the network transmission reliability is improved.

Furthermore, since the wireless mobile device 1 is moving fast, it is not fixed after the backup link is established. When the data link is forwarding data, the backup link is also roaming, so that the backup link always has a good link quality, and when the data link is abnormal, it can switch quickly and seamlessly to provide high-quality data forwarding services.

Since the wireless mobile device 1 is moving fast, as shown in Figure 2, when the wireless mobile device 1 moves up along the arrow on the left, its corresponding trackside wireless access points from left to right comprise a first trackside wireless access point, a second trackside wireless access point and a third trackside wireless access point. It can be seen that the wireless mobile device 1 starts to establish a data link with the first trackside wireless access point, and establishes a backup link with the second trackside wireless access point. As it moves up, it gets closer to the second trackside wireless access point and farther away from the first trackside wireless access point. In this case, the backup link is switched to the data link, thus the backup link can roam to the third trackside wireless access point, and the same operation can be performed when it moves to be close to the third trackside wireless access point. It can be understood that the foregoing description is only a simple example, and is not considered as a limited implementation of the technical solution.

In a preferred embodiment of the present invention, each of the plurality of trackside wireless access points in the associable basic service set is associated with a corresponding maximum supported rate and signal-to-noise ratio;
the signal screening module 22 comprises:
a screening unit 221, configured to delete each of the plurality of trackside wireless access points whose signal-to-noise ratio is less than a first threshold from the associable basic service set to obtain a screening set, and all of the trackside wireless access points in the screening set are arranged in a sequence of the signal-to-noise ratio from large to small to form a first queue;
an adjustment unit 222, connected to the screening unit 221, configured to perform bubble sort on each of the trackside wireless access points in the first queue, according to the maximum supported rate and the signal-to-noise ratio, to obtain a second queue;
an extraction unit 223, connected to the adjustment unit 222, configured to extract the trackside wireless access point that sorts the first in the second queue as the optimal trackside wireless access point, and extract the trackside wireless access point closely adjacent to the optimal trackside wireless access point as the suboptimal trackside wireless access point.

In particular, in this embodiment, when screening the trackside wireless access points 1, some of trackside wireless access points 1 with too low signal-to-noise ratios are firstly eliminated based on the signal-to-noise ratios, so as to ensure the quality of the data link while reducing the computational complexity of the subsequent bubble sort. Wherein, the above-mentioned first threshold may be configured according to actual requirements. Considering that the signal-to-noise ratio is the main criterion for screening trackside wireless access points 1, after removing some trackside wireless access points 1 with too low signal-to-noise ratios to obtain the screening set, the trackside wireless access points in the screening set are arranged in a sequence of the signal-to-noise ratio from large to small to form a first queue, and then the trackside wireless access points are arranged according to the maximum supported rate and the signal-to-noise ratio to obtain a second queue. Then the trackside wireless access points 1 sorted first and second in the second queue are optimal and sub-optimal wayside wireless access points required for the establishment of the links.

In a preferred embodiment of the present invention, when the adjustment unit 222 performs the bubble sort, a first difference between the signal-to-noise ratios corresponding to two adjacent trackside wireless access points in the first queue is calculated, and sequences of the two adjacent trackside wireless access points in the first queue are exchanged when the first difference is less than a second threshold and the trackside wireless access point sorting at the first of the two adjacent trackside wireless access points has a lower value of the maximum supported rate.

In particular, in this embodiment, if the difference between the signal-to-noise ratios of the two trackside wireless access points 1 is not large, a trackside wireless access point with the maximum supported rate has better link quality, thus, screening of the trackside wireless access pints shall be carried out based on the maximum supported rate and the signal-to-noise ratio.

In the claimed embodiment of the present invention, each of the trackside wireless access points in the associable basic service set is associated with a corresponding signal-to-noise ratio;
the fast roaming module 24 comprises:
a first roaming unit 241, configured to obtain, after the backup link is established, the optimal trackside wireless access point in the associable basic service set currently identified by the signal scanning module output by the signal screening module in real time, and the optimal trackside wireless access point being output as a real-time optimal wireless access point;
an optimization unit 242, connected to the first roaming unit 241, and configured to output a roaming signal when the signal-to-noise ratio of the real-time optimal wireless access point is higher than the signal-to-noise ratio of the trackside wireless access point associated with the backup link and when a second difference between the signal-to-noise ratio of the real-time optimal wireless access point and the signal-to-noise ratio of the trackside wireless access point associated with the backup link is higher than the third threshold;
wherein the link establishment module 23 controls the virtual base station corresponding to the backup link to roam to the real-time optimal wireless access point to establish the backup link, according to the roaming signal, so as to continuously optimize the backup link.

In particular, in this embodiment, the trackside wireless access points 1 associated with the backup link roam based on real-time scanning results of the signal scanning module, and each trackside wireless access point 1 found in the current scan also joins the associated basic service set. It can be understood that, with the rapid movement of the wireless mobile device 2, the trackside wireless access points 1 included in the associable basic service set here are different from the trackside wireless access points 1 included in the associable basic service set found by scanning when the wireless mobile device is started. Likewise, there are usually a plurality of trackside wireless access points 1 found in the current scan, so the signal screening module needs to select an optimal trackside wireless access point 1 therefrom as the real-time wireless access point. Furthermore, after the real-time optimal wireless access point is selected, it is also necessary to judge whether it has better link quality than the current backup link. Only when it has the better link quality can the backup link be adjusted, otherwise the current backup link remains the same. In this embodiment, it is judged whether the real-time optimal wireless access point has better link quality than the current backup link based on the signal-to-noise ratio.

In a preferred embodiment of the present invention, each of the plurality of trackside wireless access points is associated with a unique identity information;
the fast roaming module 24 further comprises a judging unit 243, wherein the judging unit 243 is connected to the first roaming unit 241 for outputting a first signal when it is judged that the unique identity information of the real-time optimal wireless access point is consistent with the unique identity of the trackside wireless access point associated with the data link, and for outputting a second signal when it is judged that the unique identity information of the real-time optimal wireless access point is not consistent with the unique identity of the trackside wireless access point associated with the data link;
wherein the first roaming unit 241 discards the real-time optimal wireless access point based on the first signal, and outputs the real-time optimal wireless access point based on the second signal.

In particular, in this embodiment, when the trackside wireless access points 1 are scanned and found, although the trackside wireless access point 1 corresponding to the data link has already established a link connection with one of the virtual base stations, it will still be found by scanning, so when a further screening is performed, the trackside wireless access point 1 corresponding to the data link may also be screened as the real-time optimal wireless access point. If the link connection is then established directly, the two virtual base stations of the wireless mobile device 1 will be connected to the same trackside wireless access point, and cannot be mutually backed up. Therefore, in this embodiment, after the real-time optimal wireless access point is screened out, it is necessary to establish a subsequent backup link only if it is not the trackside wireless access point 1 currently connected to the data link, otherwise the screening is performed again.

In a preferred embodiment of the present invention, abnormal status of the link comprises: the data link is disconnected, or the signal-to-noise ratio of the data link is less than the signal-to-noise ratio of the backup link and a third difference between the signal-to-noise ratio of the data link and the signal-to-noise ratio of the backup link is greater than a fourth threshold, or the signal-to-noise ratio of the data link is less than a fifth threshold and the signal-to-noise ratio of the data link is less than the signal-to-noise ratio of the backup link.

In particular, in this embodiment, when the signal-to-noise ratio of the data link is less than the signal-to-noise ratio of the backup link and a third difference between the signal-to-noise ratio of the data link and the signal-to-noise ratio of the backup link is greater than a fourth threshold, it indicates that the current link quality of the backup link is good enough and is better than that of the data link, and to ensure the quality of data transmission, link switching is triggered. The above-mentioned fifth threshold can be set to a smaller value. When the signal-to-noise ratio of the data link is lower than the fifth threshold, it indicates that the link quality of the data link is too low. If the signal-to-noise ratio of the data link is less than the signal-to-noise ratio of the backup link, even if the third difference between the signal-to-noise ratios of the backup link and the signal-to-noise ratios of the data link is not greater than the fourth threshold, that is, the link quality of the backup link is better than that of the data link but not good enough, the link switching can also be triggered.

In a preferred embodiment of the present invention, a working channel is pre-configured in the wireless mobile device 2, the signal scanning module 21, when performing a real-time scanning of a wireless signal, first scans the configured working channel, and begins to scan all channels when an associable trackside wireless access point is not available in the working channel.

In particular, in this embodiment, the working channel pre-configured in the wireless mobile device 2 is preferably the working channel of each trackside wireless access point 1. However, the working channel of each trackside wireless access point 1 may change during its working process with consideration of special requirements or other factors. Therefore, in order to improve the scanning and discovery efficiency of each trackside wireless access point 1, the configured working channel is preferentially scanned, and if an associable trackside wireless access point is not found when scanning the working channel, performing scanning on all the channels.

More preferably, since the wireless mobile device 2 in this embodiment is a single radio frequency wireless device, it can only operate on a single radio frequency, that is, two trackside wireless access points 1, to which the two virtual base stations of one wireless mobile device 2 are connected, needs the same working channel. Therefore, in extreme cases, if the optimal trackside wireless access point 1 and the suboptimal trackside wireless access point 1 screened out from the associable basic service set have different working channels, only a data link may be established, and the data link performs normal roaming for meeting basic service needs, that is, the wireless mobile device 2 can still transmit data normally.

In a more preferred embodiment of the present invention, the fast roaming module 24 also generates an update signal each time the current backup link is switched to the data link; at least one proxy device is connected to the wireless mobile device 2 via a wired connection;
the wireless mobile device 2 further comprises a forwarding and updating module 25, connected to the fast roaming module 24, and configured to actively broadcast upwards, according to the update signal, an update message containing MAC addresses of the proxy devices via the trackside wireless access point associated with the switched data link, and configured to trigger the updating of forwarding tables of all forwarding devices in an uplink.

In particular, in this embodiment, each time a data link is switched, the forwarding update module 25, instead of each proxy device, will actively send the update message, so that all devices on the data forwarding link update the forwarding tables in time to ensure that loss of data can be avoided when data is being forwarded. Furthermore, the wireless mobile device 1 itself also has a local forwarding table. When the data link is switched, the seamless switching of the data link is also realized by modifying the local forwarding table, and all received data packets are handed over to interfaces of the virtual base stations associated with the data link during the process of wireless driving, so that the forwarding table can learn the updated interfaces of the data link, and cached packets of the virtual base station interfaces of the backup link are also released to the data link interface for processing. In this way, packets are not lost in a switchover process of the data link, and the data link interface, instead of the proxy device, broadcasts upward the update message, and update of the forwarding tables of all forwarding devices in the uplink can be triggered.

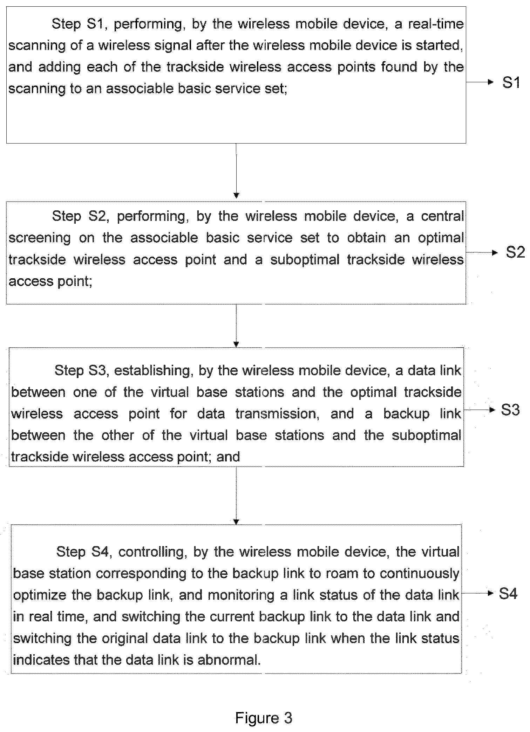

The present invention further provides a wireless fast roaming method applied to the above-mentioned wireless fast roaming system, as shown in Figure 3, the wireless fast roaming method comprises the steps of:
Step S1, performing, by the wireless mobile device, a real-time scanning of a wireless signal after the wireless mobile device is started, and adding each of the trackside wireless access points found by the scanning to an associable basic service set;
Step S2, performing, by the wireless mobile device, a central screening on the associable basic service set to obtain an optimal trackside wireless access point and a suboptimal trackside wireless access point;
Step S3, establishing, by the wireless mobile device, a data link between one of the virtual base stations and the optimal trackside wireless access point for data transmission, and a backup link between the other of the virtual base stations and the suboptimal trackside wireless access point; and
Step S4, controlling, by the wireless mobile device, the virtual base station corresponding to the backup link to roam to continuously optimize the backup link, and monitoring a link status of the data link in real time, and switching the current backup link to the data link and switching the original data link to the backup link when the link status indicates that the data link is abnormal.

The above descriptions are only the preferred embodiments of the invention, not thus limiting the embodiments and scope of the invention. Those skilled in the art should be able to realize that the schemes obtained from the content of specification and drawings of the invention are within the scope of the invention, as defined by the appended set of claims.

## Claims

1. A wireless fast roaming system, comprising:
a plurality of trackside wireless access points (1), distributed on both sides of a road;
at least one wireless mobile device (2), loaded on a vehicle driving on the road, wherein at least two virtual base stations are configured in each wireless mobile device (2) in advance, each of the wireless mobile devices (2) comprises:
a signal scanning module (21) for performing real-time scanning of wireless signals after the wireless mobile device is started, and adding each of the plurality of trackside wireless access points found by the scanning to an associable basic service set;
a signal screening module (22), connected to the signal scanning module (21), and configured to screen the associable basic service set to obtain an optimal trackside wireless access point and a suboptimal trackside wireless access point;
a link establishment module (23), connected to the signal screening module (22), and configured to establish a data link between one of the virtual base stations and the optimal trackside wireless access point for data transmission, and configured to establish a backup link between the other of the virtual base stations and the suboptimal trackside wireless access point; **characterized in that**,
a fast roaming module (24), connected to the signal scanning module (21) and the signal screening module (22), respectively, and configured to control the virtual base station corresponding to the backup link to roam, so as to continuously optimize the backup link, and configured to monitor a link status of the data link in real time, and to switch a current backup link to the data link when the link status indicates that the data link is abnormal;
each of the trackside wireless access points in the associable basic service set is associated with a corresponding signal-to-noise ratio;
the fast roaming module (24) comprises:
a first roaming unit (241), configured to obtain, after the backup link is established, the optimal trackside wireless access point in the associable basic service set currently identified by the signal scanning module output by the signal screening module in real time, and the optimal trackside wireless access point being output as a real-time optimal wireless access point;
an optimization unit (242), connected to the first roaming unit (241), and configured to output a roaming signal when the signal-to-noise ratio of the real-time optimal wireless access point is higher than the signal-to-noise ratio of the trackside wireless access point associated with the backup link and when a second difference between the signal-to-noise ratio of the real-time optimal wireless access point and the signal-to-noise ratio of the trackside wireless access point associated with the backup link is higher than a third threshold;
wherein the link establishment module (23) controls the virtual base station corresponding to the backup link to roam to the real-time optimal wireless access point to establish the backup link, according to the roaming signal, so as to continuously optimize the backup link.

2. The wireless fast roaming system of claim 1, wherein each of the plurality of trackside wireless access points in the associable basic service set is associated with a corresponding maximum supported rate and signal-to-noise ratio;
the signal screening module (22) comprises:
a screening unit (221), configured to delete each of the plurality of trackside wireless access points whose signal-to-noise ratio is less than a first threshold from the associable basic service set to obtain a screening set, and all of the trackside wireless access points in the screening set are arranged, in a sequence of the signal-to-noise ratio from large to small, to form a first queue;
an adjustment unit (222), connected to the screening unit (221), configured to perform bubble sort on each of the trackside wireless access points in the first queue, according to the maximum supported rate and the signal-to-noise ratio, to obtain a second queue;
an extraction unit (223), connected to the adjustment unit (222), configured to extract the trackside wireless access point ranking first in the second queue as the optimal trackside wireless access point, and extract the trackside wireless access point closely adjacent to the optimal trackside wireless access point as the suboptimal trackside wireless access point.

3. The wireless fast roaming system of claim 2, wherein when the adjustment unit (222) performs the bubble sort, a first difference between the signal-to-noise ratios corresponding to two adjacent trackside wireless access points in the first queue is calculated, and sequences of the two adjacent trackside wireless access points in the first queue are exchanged when the first difference is less than a second threshold and the trackside wireless access point sorting at a first of the two adjacent trackside wireless access points has a lower value of the maximum supported rate.

4. The wireless fast roaming system of claim 1, wherein, each of the plurality of trackside wireless access points is associated with an unique identity information;
the fast roaming module (24) further comprises a judging unit (243), wherein the judging unit (243) is connected to the first roaming unit (241) for outputting a first signal when it is judged that the unique identity information of the real-time optimal wireless access point is consistent with the unique identity of the trackside wireless access point associated with the data link, and for outputting a second signal when it is judged that the unique identity information of the real-time optimal wireless access point is not consistent with the unique identity of the trackside wireless access point associated with the data link;
wherein the first roaming unit (241) discards the real-time optimal wireless access point based on the first signal, and outputs the real-time optimal wireless access point based on the second signal.

5. The wireless fast roaming system of claim 1, wherein abnormal status of the link comprises: the data link is disconnected, or the signal-to-noise ratio of the data link is less than the signal-to-noise ratio of the backup link and a third difference between the signal-to-noise ratio of the data link and the signal-to-noise ratio of the backup link is greater than a fourth threshold, or the signal-to-noise ratio of the data link is less than a fifth threshold and the signal-to-noise ratio of the data link is less than the signal-to-noise ratio of the backup link.

6. The wireless fast roaming system of claim 1, wherein a working channel is pre-configured in the wireless mobile device, the signal scanning module (21), when performing a real-time scanning of a wireless signal, first scans the configured working channel, and begins to scan all channels when an associable trackside wireless access point is not available in the working channel.

7. The wireless fast roaming system of claim 1, wherein the fast roaming module (24) also generates an update signal each time the current backup link is switched to the data link; at least one proxy device is connected to the wireless mobile device (2) via a wired connection;
the wireless mobile device (2) further comprises a forwarding and updating module (25), connected to the fast roaming module (24), and configured to actively broadcast upwards, according to the update signal, an update message containing MAC addresses of the proxy devices via the trackside wireless access point associated with the switched data link, and configured to trigger the updating of forwarding tables of all forwarding devices in an uplink.

8. The wireless fast roaming system of claim 1, wherein the wireless mobile device is a single radio frequency wireless device.

## Patentansprüche

1. - Drahtloses schnelles Roaming-System, umfassend:
eine Vielzahl von streckenseitigen drahtlosen Zugangspunkten (1), die auf beiden Seiten einer Straße verteilt sind;
mindestens eine drahtlose mobile Vorrichtung (2), die in einem auf der Straße fahrenden Fahrzeug geladen ist, wobei in jeder drahtlosen mobilen Vorrichtung (2) im Voraus mindestens zwei virtuelle Basisstationen konfiguriert werden, wobei jede der drahtlosen mobilen Vorrichtungen (2) Folgendes umfasst:
ein Signalabtastmodul (21) zum Durchführen einer Echtzeitabtastung von drahtlosen Signalen, nachdem die drahtlose mobile Vorrichtung gestartet wurde, und zum Hinzufügen von jedem der Vielzahl von streckenseitigen drahtlosen Zugangspunkten, die durch das Abtasten gefunden werden, zu einem assoziierbaren Basisdienstsatz;
ein Signalsichtungsmodul (22), das mit dem Signalabtastmodul (21) verbunden und konfiguriert ist, um den assoziierbaren Basisdienstsatz zu sichten, um einen optimalen streckenseitigen drahtlosen Zugangspunkt und einen suboptimalen streckenseitigen drahtlosen Zugangspunkt zu erlangen;
ein Verbindungsaufbaumodul (23), das mit dem Signalsichtungsmodul (22) verbunden und konfiguriert ist, um eine Datenverbindung zwischen einer der virtuellen Basisstationen und dem optimalen streckenseitigen drahtlosen Zugangspunkt zur Datenübertragung aufzubauen, und konfiguriert ist, um eine Backup-Verbindung zwischen der anderen der virtuellen Basisstationen und dem suboptimalen streckenseitigen drahtlosen Zugangspunkt aufzubauen; **dadurch gekennzeichnet, dass**
ein schnelles Roaming-Modul (24), das jeweils mit dem Signalabtastmodul (21) und dem Signalsichtungsmodul (22) verbunden und konfiguriert ist, um die virtuelle Basisstation, die der Backup-Verbindung entspricht, zum Roaming zu steuern, um die Backup-Verbindung kontinuierlich zu optimieren, und konfiguriert ist, um einen Verbindungsstatus der Datenverbindung in Echtzeit zu überwachen und eine aktuelle Backup-Verbindung auf die Datenverbindung umzuschalten, wenn der Verbindungsstatus angibt, dass die Datenverbindung anormal ist;
jeder der streckenseitigen drahtlosen Zugangspunkte in dem assoziierbaren Basisdienstsatz mit einem entsprechender Signal-Rausch-Verhältnis assoziiert ist;
wobei das schnelle Roaming-Modul (24) Folgendes umfasst:
eine erste Roaming-Einheit (241), die konfiguriert ist, um, nachdem die Backup-Verbindung aufgebaut ist, in dem assoziierbaren Basisdienstsatz zu erlangen, der aktuell von dem Signalabtastmodul identifiziert wird, den optimalen streckenseitigen drahtlosen Zugangspunkt der von dem Signalsichtungsmodul in Echtzeit ausgegeben wird, und wobei der optimale streckenseitige drahtlose Zugangspunkt als ein optimaler drahtloser Zugangspunkt in Echtzeit ausgegeben wird;
eine Optimierungseinheit (242), die mit der ersten Roaming-Einheit (241) verbunden und konfiguriert ist, um ein Roaming-Signal auszugeben, wenn das Signal-Rausch-Verhältnis des optimalen drahtlosen Echtzeit-Zugangspunkts höher ist als das Signal-Rausch-Verhältnis des drahtlosen streckenseitigen Zugangspunkts, der mit der Backup-Verbindung assoziert ist, und wenn eine zweite Differenz zwischen dem Signal-Rausch-Verhältnis des optimalen drahtlosen Echtzeit-Zugangspunkts und dem Signal-Rausch-Verhältnis des drahtlosen streckenseitigen Zugangspunkts, der mit der Backup-Verbindung assoziert ist, höher ist als ein dritter Schwellenwert;
wobei das Verbindungsaufbaumodul (23) die virtuelle Basisstation, die der Backup-Verbindung entspricht, steuert, um zu dem optimalen drahtlosen Echtzeit-Zugangspunkt zu roamen, um die Backup-Verbindung gemäß dem Roaming-Signal aufzubauen, um die Backup-Verbindung kontinuierlich zu optimieren.

2. - Drahtloses schnelles Roaming-System nach Anspruch 1, wobei jeder der Vielzahl von streckenseitigen drahtlosen Zugangspunkten in dem assoziierbaren Basisdienstsatz mit einer entsprechenden maximal unterstützten Rate und einem entsprechenden Signal-Rausch-Verhältnis assoziiert ist;
das Signalsichtungsmodul (22) Folgendes umfasst:
eine Sichtungseinheit (221), die konfiguriert ist, um jeden der Vielzahl von streckenseitigen drahtlosen Zugangspunkten, deren Signal-Rausch-Verhältnis kleiner ist als ein erster Schwellenwert, aus dem assoziierbaren Basisdienstsatz zu löschen, um einen Sichtungssatz zu erlangen, und alle streckenseitigen drahtlosen Zugangspunkte in dem Sichtungssatz in einer Reihenfolge des Signal-Rausch-Verhältnisses von groß zu klein angeordnet sind, um eine erste Warteschlange zu bilden;
eine Anpassungseinheit (222), die mit der Sichtungseinheit (221) verbunden und konfiguriert ist, um eine Bubble-Sortierung an jedem der streckenseitigen drahtlosen Zugangspunkte in der ersten Warteschlange gemäß der maximal unterstützten Rate und dem Signal-Rausch-Verhältnis durchzuführen, um eine zweite Warteschlange zu erlangen;
eine Extraktionseinheit (223), die mit der Anpassungseinheit (222) verbunden und konfiguriert ist, um den streckenseitigen drahtlosen Zugangspunkt, der in der zweiten Warteschlange an erster Stelle steht, als den optimalen streckenseitigen drahtlosen Zugangspunkt zu extrahieren und den streckenseitigen drahtlosen Zugangspunkt, der dem optimalen streckenseitigen drahtlosen Zugangspunkt nahe benachbart ist, als den suboptimalen streckenseitigen drahtlosen Zugangspunkt zu extrahieren.

3. - Drahtloses schnelles Roaming-System nach Anspruch 2, wobei, wenn die Anpassungseinheit (222) die Bubble-Sortierung durchführt, eine erste Differenz zwischen den Signal-Rausch-Verhältnissen, die zwei benachbarten streckenseitigen drahtlosen Zugangspunkten in der ersten Warteschlange entsprechen, berechnet wird, und Sequenzen der zwei benachbarten streckenseitigen drahtlosen Zugangspunkte in der ersten Warteschlange ausgetauscht werden, wenn die erste Differenz kleiner ist als ein zweiter Schwellenwert und das Sortieren der streckenseitigen drahtlosen Zugangspunkte an einem ersten der zwei benachbarten streckenseitigen drahtlosen Zugangspunkte einen niedrigeren Wert der maximal unterstützten Rate aufweist.

4. - Drahtloses schnelles Roaming-System nach Anspruch 1, wobei jeder der Vielzahl von streckenseitigen drahtlosen Zugangspunkten mit eindeutigen Identitätsinformationen assoziiert ist;
das schnelle Roaming-Modul (24) ferner eine Beurteilungseinheit (243) umfasst, wobei die Beurteilungseinheit (243) mit der ersten Roaming-Einheit (241) verbunden ist, um ein erstes Signal auszugeben, wenn beurteilt wird, dass die eindeutigen Identitätsinformationen des optimalen drahtlosen Echtzeit-Zugangspunkts mit der eindeutigen Identität des streckenseitigen drahtlosen Zugangspunkts übereinstimmt, der mit der Datenverbindung assoziiert ist, und um ein zweites Signal auszugeben, wenn beurteilt wird, dass die eindeutigen Identitätsinformationen des optimalen drahtlosen Echtzeit-Zugriffspunkts nicht mit der eindeutigen Identität des streckenseitigen drahtlosen Zugangspunkts übereinstimmt, der mit der Datenverbindung assoziiert ist;
wobei die erste Roaming-Einheit (241) den optimalen drahtlosen Echtzeit-Zugangspunkt basierend auf dem ersten Signal verwirft und den optimalen drahtlosen Echtzeit-Zugangspunkt basierend auf dem zweiten Signal ausgibt.

5. - Drahtloses schnelles Roaming-System nach Anspruch 1, wobei der anormale Status der Verbindung Folgendes umfasst: die Datenverbindung ist unterbrochen, oder das Signal-Rausch-Verhältnis der Datenverbindung ist niedriger als das Signal-Rausch-Verhältnis der Backup-Verbindung und eine dritte Differenz zwischen dem Signal-Rausch-Verhältnis der Datenverbindung und dem Signal-Rausch-Verhältnis der Backup-Verbindung ist größer als ein vierter Schwellenwert, oder das Signal-Rausch-Verhältnis der Datenverbindung ist niedriger als ein fünfter Schwellenwert und das Signal-Rausch-Verhältnis der Datenverbindung ist niedriger als das Signal-Rausch-Verhältnis der Backup-Verbindung.

6. - Drahtloses schnelles Roaming-System nach Anspruch 1, wobei ein Arbeitskanal in der drahtlosen mobilen Vorrichtung vorkonfiguriert ist, wobei das Signalabtastmodul (21) beim der Durchführen einer Echtzeitabtastung eines drahtlosen Signals zunächst den konfigurierten Arbeitskanal abtastet und mit der Abtastung aller Kanäle beginnt, wenn ein assoziierbarer drahtloser Zugangspunkt in dem Arbeitskanal nicht verfügbar ist.

7. - Drahtloses schnelles Roaming-System nach Anspruch 1, wobei das schnelle Roaming-Modul (24) auch jedes Mal ein Aktualisierungssignal erzeugt, wenn die aktuelle Backup-Verbindung auf die Datenverbindung umgeschaltet wird; mindestens eine Proxy-Vorrichtung mit der drahtlosen mobilen Vorrichtung (2) über eine drahtgebundene Verbindung verbunden ist;
die drahtlose mobile Vorrichtung (2) ferner ein Weiterleitungs- und Aktualisierungsmodul (25) umfasst, das mit dem schnellen Roaming-Modul (24) verbunden und konfiguriert ist, um entsprechend dem Aktualisierungssignal eine Aktualisierungsnachricht, die MAC-Adressen der Proxy-Vorrichtungen enthält, über den streckenseitigen drahtlosen Zugangspunkt, der mit der geschalteten Datenverbindung assoziiert ist, aktiv nach oben zu senden, und konfiguriert ist, um die Aktualisierung der Weiterleitungstabellen aller Weiterleitungsgeräte in einem Uplink auszulösen.

8. - Drahtloses schnelles Roaming-System nach Anspruch 1, wobei die drahtlose mobile Vorrichtung eine einzelne drahtlose Hochfrequenzvorrichtung ist.

## Revendications

1. - Système d'itinérance rapide sans fil, comprenant :
une pluralité de points d'accès sans fil de voie (1), répartis de part et d'autre d'une route ;
au moins un dispositif mobile sans fil (2), embarqué sur un véhicule roulant sur la route, dans lequel au moins deux stations de base virtuelles sont configurées à l'avance dans chaque dispositif mobile sans fil (2), chacun des dispositifs mobiles sans fil (2) comprenant :
un module de balayage de signal (21) pour effectuer un balayage en temps réel de signaux sans fil après le démarrage du dispositif mobile sans fil, et ajouter chacun de la pluralité de points d'accès sans fil de voie trouvés par le balayage à un ensemble de services de base associable ;
un module de filtrage de signal (22), connecté au module de balayage de signal (21), et configuré pour filtrer l'ensemble de services de base associable afin d'obtenir un point d'accès sans fil de voie optimal et un point d'accès sans fil de voie sous-optimal ;
un module d'établissement de liaison (23), connecté au module de filtrage de signal (22), et configuré pour établir une liaison de données entre l'une des stations de base virtuelles et le point d'accès sans fil de voie optimal pour une transmission de données, et configuré pour établir une liaison de secours entre l'autre des stations de base virtuelles et le point d'accès sans fil de voie sous-optimal ; **caractérisé par le fait que** :
un module d'itinérance rapide (24), connecté respectivement au module de balayage de signal (21) et au module de filtrage de signal (22), et configuré pour commander la station de base virtuelle correspondant à la liaison de secours de se déplacer, de manière à optimiser en permanence la liaison de secours, et configuré pour surveiller un état de liaison de la liaison de données en temps réel, et pour commuter une liaison de secours courante sur la liaison de données lorsque l'état de la liaison indique que la liaison de données est anormale ;
chacun des points d'accès sans fil de voie dans l'ensemble de services de base associable est associé à un rapport signal/bruit correspondant ;
le module d'itinérance rapide (24) comprend :
une première unité d'itinérance (241), configurée pour obtenir, après l'établissement de la liaison de secours, le point d'accès sans fil de voie optimal, dans l'ensemble de services de base associable actuellement identifié par le module de balayage de signal, produit par le module de filtrage de signal en temps réel, et le point d'accès sans fil de voie optimal étant produit en tant que point d'accès sans fil optimal en temps réel ;
une unité d'optimisation (242), connectée à la première unité d'itinérance (241) et configurée pour émettre un signal d'itinérance lorsque le rapport signal/bruit du point d'accès sans fil optimal en temps réel est supérieur au rapport signal/bruit du point d'accès sans fil de voie associé à la liaison de secours et lorsqu'une deuxième différence entre le rapport signal/bruit du point d'accès sans fil optimal en temps réel et le rapport signal/bruit du point d'accès sans fil de voie associé à la liaison de secours est supérieure à un troisième seuil ;
dans lequel le module d'établissement de liaison (23) commande à la station de base virtuelle correspondant à la liaison de secours de se déplacer vers le point d'accès sans fil optimal en temps réel pour établir la liaison de secours, conformément au signal d'itinérance, de manière à optimiser en permanence la liaison de secours.

2. - Système d'itinérance rapide sans fil de la revendication 1, dans lequel chacun de la pluralité de points d'accès sans fil de voie dans l'ensemble de services de base associable est associé à un débit maximal pris en charge et à un rapport signal/bruit correspondants ;
le module de filtrage de signal (22) comprend :
une unité de filtrage (221), configurée pour supprimer de l'ensemble de services de base associable chacun de la pluralité de points d'accès sans fil de voie dont le rapport signal/bruit est inférieur à un premier seuil, afin d'obtenir un ensemble de filtrage, et tous les points d'accès sans fil de voie dans l'ensemble de filtrage sont disposés, dans une séquence du rapport signal/bruit, du plus grand au plus petit, pour former une première file d'attente ;
une unité de réglage (222), connectée à l'unité de filtrage (221), configurée pour effectuer un tri à bulles sur chacun des points d'accès sans fil de voie de la première file d'attente, en fonction du débit maximal pris en charge et du rapport signal/bruit, afin d'obtenir une deuxième file d'attente ;
une unité d'extraction (223), connectée à l'unité de réglage (222), configurée pour extraire le point d'accès sans fil de voie classé premier dans la deuxième file d'attente en tant que point d'accès sans fil de voie optimal, et pour extraire le point d'accès sans fil de voie étroitement adjacent au point d'accès sans fil de voie optimal en tant que point d'accès sans fil de voie sous-optimal.

3. - Système d'itinérance rapide sans fil de la revendication 2, dans lequel, lorsque l'unité de réglage (222) effectue le tri à bulles, une première différence entre les rapports signal/bruit correspondant à deux points d'accès sans fil de voie adjacents dans la première file d'attente est calculée, et les séquences des deux points d'accès sans fil de voie adjacents dans la première file d'attente sont échangées lorsque la première différence est inférieure à un deuxième seuil et que le tri des points d'accès sans fil de voie à un premier des deux points d'accès sans fil de voie adjacents a une valeur inférieure au débit maximal pris en charge.

4. - Système d'itinérance rapide sans fil de la revendication 1, dans lequel chacun de la pluralité de points d'accès sans fil de voie est associé à une information d'identité unique ;
le module d'itinérance rapide (24) comprend en outre une unité de jugement (243), dans laquelle l'unité de jugement (243) est connectée à la première unité d'itinérance (241) pour émettre un premier signal lorsqu'il est jugé que les informations d'identité unique du point d'accès sans fil optimal en temps réel sont cohérentes avec l'identité unique du point d'accès sans fil de voie associé à la liaison de données, et pour émettre un second signal lorsqu'il est jugé que les informations d'identité unique du point d'accès sans fil optimal en temps réel ne sont pas cohérentes avec l'identité unique du point d'accès sans fil de voie associé à la liaison de données ;
la première unité d'itinérance (241) écartant le point d'accès sans fil optimal en temps réel sur la base du premier signal, et émettant le point d'accès sans fil optimal en temps réel sur la base du second signal.

5. - Système d'itinérance rapide sans fil de la revendication 1, dans lequel l'état anormal de la liaison comprend : la liaison de données est déconnectée, ou le rapport signal/bruit de la liaison de données est inférieur au rapport signal/bruit de la liaison de secours et une troisième différence entre le rapport signal/bruit de la liaison de données et le rapport signal/bruit de la liaison de secours est supérieure à un quatrième seuil, ou le rapport signal/bruit de la liaison de données est inférieur à un cinquième seuil et le rapport signal/bruit de la liaison de données est inférieur au rapport signal/bruit de la liaison de secours.

6. - Système d'itinérance rapide sans fil de la revendication 1, dans lequel un canal de travail est préconfiguré dans le dispositif mobile sans fil, le module de balayage de signal (21), lorsqu'il effectue un balayage en temps réel d'un signal sans fil, balaye d'abord le canal de travail configuré, et commence à balayer tous les canaux lorsqu'un point d'accès sans fil de voie associable n'est pas disponible dans le canal de travail.

7. - Système d'itinérance rapide sans fil de la revendication 1, dans lequel le module d'itinérance rapide (24) génère également un signal de mise à jour chaque fois que la liaison de secours courante est commutée vers la liaison de données ; au moins un dispositif mandataire est connecté au dispositif mobile sans fil (2) via une connexion câblée ;
le dispositif mobile sans fil (2) comprend en outre un module de transmission et de mise à jour (25), connecté au module d'itinérance rapide (24) et configuré pour diffuser activement vers le haut, en fonction du signal de mise à jour, un message de mise à jour contenant les adresses MAC des dispositifs mandataires via le point d'accès sans fil de voie associé à la liaison de données commutée, et configuré pour déclencher la mise à jour des tables de transmission de tous les dispositifs de transmission dans une liaison montante.

8. - Système d'itinérance rapide sans fil de la revendication 1, dans lequel le dispositif mobile sans fil est un dispositif sans fil à fréquence radio unique.
